Europäisches Patentamt

(19) European Patent Office

Office européen des brevets

(11) Publication number: **0 307 399 B1**

## EUROPEAN PATENT SPECIFICATION

(45) Date of publication of patent specification:
24.04.91 Bulletin 91/17

(51) Int. Cl.⁵: **B65G 47/52, B65G 21/14**

(21) Application number: 87902664.9

(22) Date of filing: 12.05.87

(86) International application number:
PCT/GB87/00318

(87) International publication number:
WO 87/06918 19.11.87 Gazette 87/25

(54) **LOADING DEVICE.**

(30) Priority: 13.05.86 GB 8611642
05.08.86 GB 8619048

(43) Date of publication of application:
22.03.89 Bulletin 89/12

(45) Publication of the grant of the patent:
24.04.91 Bulletin 91/17

(84) Designated Contracting States:
AT BE CH DE FR GB IT LI LU NL SE

(56) References cited:
DE-A- 3 151 654
US-A- 1 793 006
US-A- 3 631 812
US-A- 4 460 110

(73) Proprietor: The Secretary of State for Trade
and Industry in Her Britannic Majesty's
Government of the United Kingdom of Great
Britain and
Northern Ireland 1/19 Victoria Street
London SW1H OET (GB)

(72) Inventor: BRYCE, Graham, Watt
63 Atholl Drive Giffnock
Glasgow G46 6QW (GB)

(74) Representative: Beckham, Robert William et al
Procurement Executive Ministry of Defence
Patents 1A(4), Room 2014
Empress State Building Lillie Road London
SW6 1TR (GB)

## Description

This application relates to a device for accurate placement of sheets in a press, for example, for manufacturing printed circuit boards or fibre reinforced plastic panels.

At present such sheets are placed manually in the press. This method of placing is very labour intensive. There is also a problem experienced in handling and ·placing sheets which have a large area and a relatively shallow depth. Also the working environment for placement of sheets in the press is not always suitable, especially where a hot curing press is involved. Furthermore the placement of sheets in the press can be very messy especially where a layer of adhesive is applied to one side of each sheet. There is also a problem experienced, for example, where more than one layer of sheet has to be accurately placed in the press.

Additionally reference is made to document DE-A-3151654, which describes an appliance for feeding powder to a brick mould whereby in an intermediate step the powder is positioned on a band which is supported on a platform underneath a proportioning frame. One end of the band is secured to the appliance above the platform. The band then passes over the platform, round a first pulley at the end of the platform, under the platform, and at right angles round a second pulley to be secured to a pretensioned third roller. The appliance is securely fixed to a bed on which is rotably mounted on a platform on which are positioned brick moulds. The platform is rotated to position a mould under the proportioning frame. The platform is withdrawn by means of a piston and cylinder arrangement and the band wound on to the pretensioned third roller. Removal of the support provided by the band and platform allows powder to pass from the proportioning frame to the brick mould.

One purpose of the present invention is to provide a device which will allow sheets to be consistently and accurately placed in the press.

This invention accordingly consists of a device for accurate placement of sheet material comprising a framework characterised in having a first and second fixed roller transversely arranged adjacent the ends of the framework, a third and a fourth slidable and rotatable roller interdisposed between the first and second rollers, a flexible support member extending from each of the fixed rollers and round the adjacent roller to a fixture on the framework, the third and fourth rollers being in a support position when the rollers are adjacent to each other near the centre of the framework and in a release position when the third roller is adjacent the first roller and the fourth roller is adjacent the second roller, whereby sheet material placed on the flexible members in the support position peels away from the members as the third and fourth rollers move symmetrically towards the release position.

Preferably each fixture on the framework is located adjacent to and in a plane higher than the axial plane of the associated fixed roller.

Preferably slots for the third and fourth rollers are provided in the framework, to allow axial spigots of the rollers to slide therein.

Alternatively a slide mechanism on the framework can be provided for the axial spigots of the third and fourth roller.

Preferably the flexible support members extend along the full length of the rollers.

Preferably the fixed rollers have a resilient biassing means such that when axial spigots of the third and fourth rollers slide symmetrically towards the release position, the flexible support members wind onto the fixed rollers.

By way of example, one embodiment of the invention will be described with reference to the accompanying diagrammatic drawings of which :

Figure 1 is a perspective view of the device in a release position in accordance with the invention,
Figure 2 is a perspective view of the device in a support position.
Figure 3 is a sectional view along III-III of Figure 1, and
Figure 4 is similar to Figure 2 but shows bands of flexible strips rather than a single flexible support member.

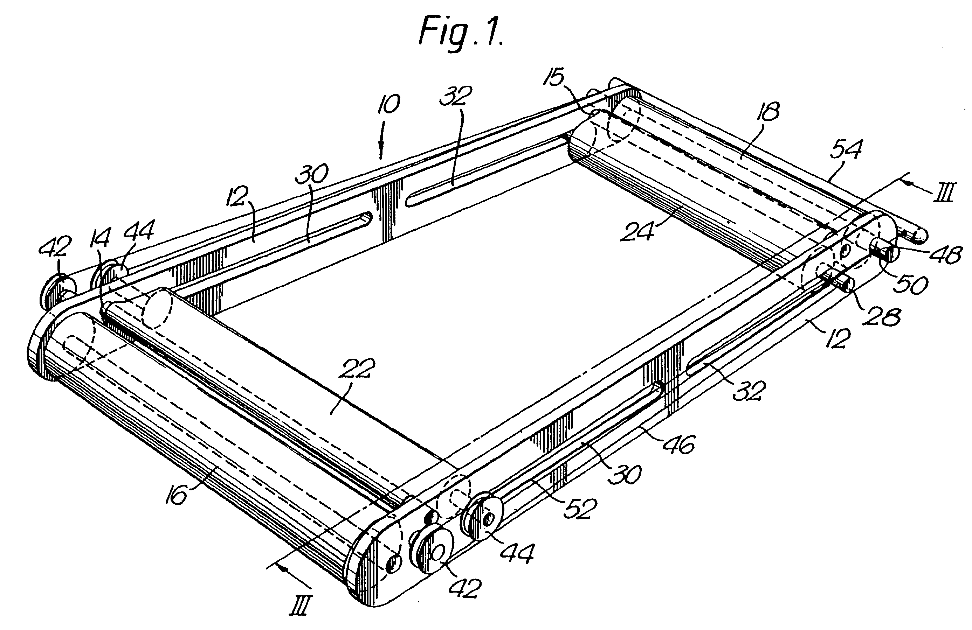

Referring to Figures 1-3 of the drawings, the device generally indicated at 10 includes a general framework having two longitudinal members 12 and two transversely extending bars 14 and 15.

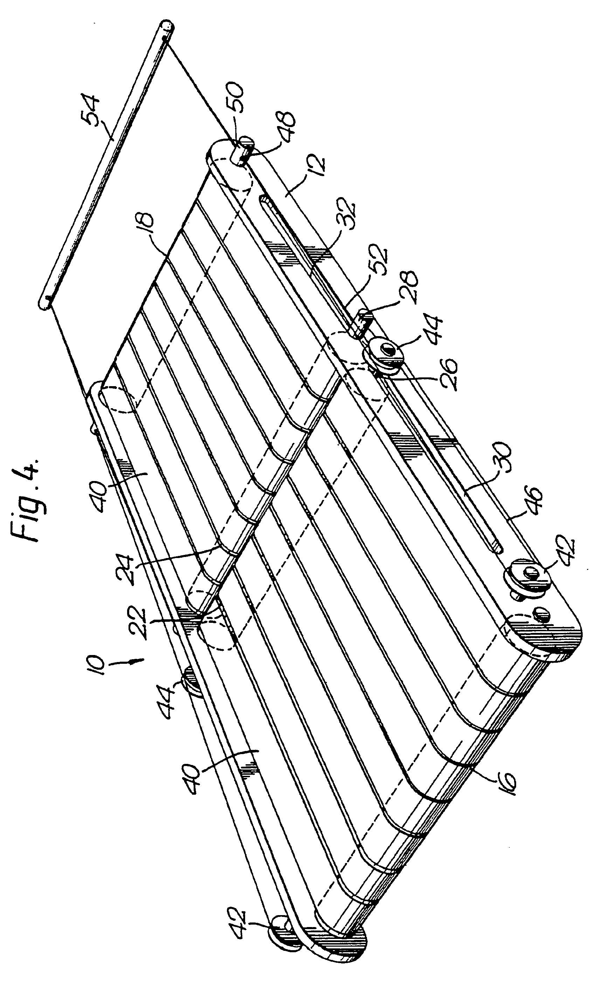

A first roller 16 and a second roller 18 are attached transversely between the ends of the two longitudinal members 12. The rollers 16 and 18 are rotatable about axial spigots 17 and 19 respectively as shown in Figure 3. Resilient biassing means 21 are incorporated within the rollers 16 and 18, the purpose of the resilient biassing means will become apparent later in the description.

Also forming part of the device 10 is a third roller 22 and a fourth roller 24 which are interdisposed between the first roller 16, and the second roller 18. The four rollers are preferably arranged to be substantially in parallel between the two longitudinal members 12. Axial spigots 26, one at each end of the roller 22 and axial spigots 28, one at each end of roller 24 extend through slots 30 and 32, formed in the longitudinal members 12. Slots 30 extending from adjacent the roller 16 and slots 32 extending from adjacent the roller 18 are of such a length that the spigots 26 and spigots 28 can slide from a release position, adjacent to the rollers 16 and 18 respectively, towards the centre of the device 10 to a support position.

A flexible support member 34 is connected to the roller 16 underneath and round the adjacent roller 22 to the transversely extending bar 14 of the framework.

Similarly a flexible support member 36 is connected to the roller 18 underneath and round the adjacent roller 24 to the transversely extending bar 15 of the framework. Conveniently, the bars 14 and 15 of the framework lie above and adjacent the rollers 16 and 18 respectively. The flexible member 34 and 36 extend along the full length of the rollers.

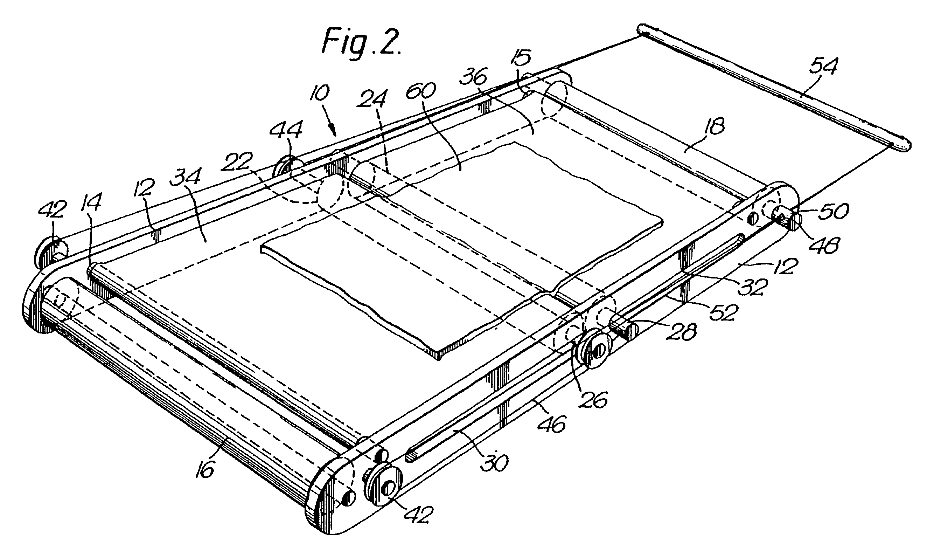

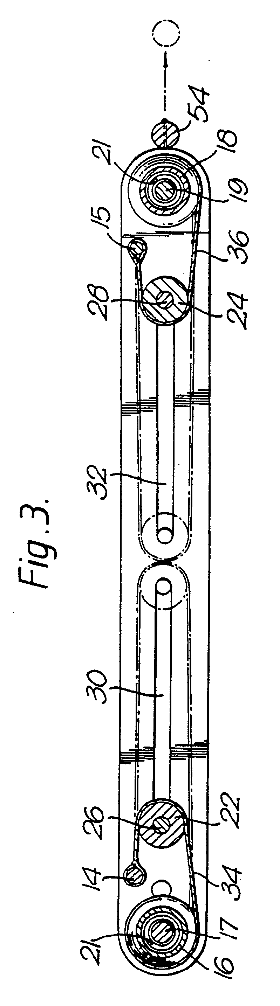

Identical pulleys 42, 44 and cables 46, 52 are arranged on the outer sides of the longitudinal members 12 to allow axial spigots 26 and 28 to slide away from their release position, as shown in Figures 1 and 3 to the support position as shown in Figure 2. The pulley 42 is rotatably mounted on the longitudunal member 12 adjacent the roller 16. The pulley 44 is provided on the axial spigot 26. To provide the sliding action for the axial spigot 28, the cable 46 is connected to a axial spigot 28. The cable 46 passes underneath the pulley 44, underneath and round the pulley 42 and through a guide hole 48 formed in an extension 50 which is attached to the member 12 adjacent the roller 18. Similarly the sliding action for the axial spigot 26 is provided by connecting the cable 52 directly to the axial spigot 26 and passing it through the guide hole 48. The two cables 46 and 52 through the guide hole 48 on each side of the longitudinal members 12 are connected to a pull rod 54.

It will be realised that the device 10 has to be positioned directly over a top of a press (not shown). The device 10, for example, can be arranged on a trolley (not shown) where the height can be adjustable for positioning.

Alternatively, where the press has to be enclosed, for example, in the case of a hot curing press and the only access for the material sheet placement is through a side, a trolley comprising the device 10 can be arranged on a track, allowing the trolley to move in and out of the press.

In use the pull rod 54 is pulled away from the position adjacent the roller 18 in a direction as shown in Figures 1 and 3. The cables 46 and 52 cause the axial spigots 26 and 28 to slide symmetrically along the slots 30 and 32 respectively towards the support position from the release position as shown by chain-dotted lines in Figure 3. The sliding action of the axial spigots 26 and 28 allows the rollers 16 and 18 to rotate and unwind the flexible support sheets 34 and 36 from the rollers 16 and 18 respectively. The rollers 22 and 24 also rotate due to the unwinding of the flexible support members 34 and 36. The area within the device is substantially enclosed by the flexible support members 34 and 36 when the two rollers 22 and 24 have completed their movements.

A material sheet 60 is placed on the extended flexible support sheets 34 and 36. The pull rod 54 is then allowed to move towards its normal position adjacent the roller 18. The fixed rollers 16 and 18, due to the resilient biassing means 21, start to rotate and wind the flexible support member 34 and 36 respectively and move the rollers 22 and 24 symmetrically towards their release position. The flexible support member 34 and 36 peel away from the material sheet 60 allowing it to drop into the press when the support provided by the flexible sheets 34 and 36 is no longer available.

In an alternative version, instead of the flexible support members 34 and 36, a series of flexible support bands 40 can be provided as shown in Figure 4.

In an alternative embodiment, the two longitudinal members 12 of the framework can be replaced by circular rods. The axial spigots 26 and 28 of the rollers 16 and 18 respectively can be connected to slide mechanisms which can slide along the circular rods and provide the necessary sliding action. An attachment arrangement for the rollers 16 and 18 will have to be provided at the ends of the two circular rods.

It will be realised that with the arrangements just described the material sheet 60 must not be greater than the area defined between the two rollers 22 and 24 and the two longitudinal Sections 12, when the device 10 is in its inoperative position.

It will, of course, be realised that a multiple layer of material sheets can be positioned at one the on the device for placement into the press.

In another alternative emboidment, one of the longitudinal member 12 can be removed and the remaining longitudinal member 12 can be reinforced so that it provides the support for the rollers and the bars 14, 15. Pulleys 42, 44 and cables 46, 52 on the removed side of the longitudinal member 12 will also be eliminated. With this arrangement the arterial sheet larger than the length of the rollers and bars 14. 15 can be supported.

It will be clear to those skilled in the art that the invention is not restricted for accurate placement of sheet material in the press. It could, for example, be used for stacking up sheet material in a warehouse or for unloading sheet material for transportation on a conveyor belt.

## Claims

1. A device (10) for accurate placement of sheet material (60), comprising a framework (12, 14, 15) having a first (16) and a second (18) fixed roller transversely arranged adjacent the ends of the framework, a third (22) and a fourth (24) slidable and rotatable roller interdisposed between the first (16) and second (18) rollers, a flexible support member (34, 36) extending from each of the fixed rollers (16, 18) and round the adjacent roller (22, 24) to a fixture (14, 15) on the framework, the third (22) and fourth (24) rollers being in a support position when the rollers are adjacent to each other near the centre of the framework and in a release position when the third roller (22) is adjacent the first roller (16) and the fourth roller (24) is adjacent the second roller (18), whereby sheet material placed on the flexible support members (34, 36) in the support position peels away from the members (34, 36) as the third and fourth rollers move symmetrically towards the release position.

2. A device according to Claim 1 characterised in that each fixture (14, 15) on the framework is located adjacent to and in a plane higher than the axial plane of the associated fixed roller (16, 18).

3. A device according to Claim or to Claim 2 characterised in that slots (30, 32) for axial spigots (26, 28) of the third and fourth rollers (22, 24) are provided in the framework.

4. A device according to any one of Claims 1 to 3 characterised in that the first and second rollers (16, 18) have a resilient biasing means such that when axial spigots (26, 28) of the third and fourth rollers (22, 24) slide symmetrically towards the release position, the flexible support members (34, 36) wind onto the fixed rollers (16, 18).

5. A device according to any one of Claims 1 to 4 characterised in that the flexible support members (34, 36) extend along the full length of the rollers (16, 17, 22, 24).

6. A device according to any one of Claims 1 to 5 characterised in that each flexible support member (34, 36) is in a form of flexible band strips.

7. Device according to any one of Claims 1 to 6 characterised in that axial spigots (26, 28) of the third and fourth rollers (22, 24) are attached to sliding mechanisms.

8. A device according to Claim 1 characterised in that the framework is formed from circular rods.

9. A device according to Claim 8 characterised in that the sliding mechanisms are slidably arranged on the circular rods of the framework.

**Ansprüche**

1. Vorrichtung (10) zum exakten Plazieren von Flachmaterialien (60), wobei die Vorrichtung einen Rahmen (12, 14, 15) mit einer ersten (16) und einer zweiten (18) an den Enden des Rahmens quer angeordnete feste Walze, eine zwischen der ersten (16) und der zweiten (18) Walze angeordnete, verschiebliche und drehbare dritte (22) und vierte (24) Walze, und ein jeweils von der festen Walze (16, 18) um die danebenliegende Walze (22, 24) herum bis zu einem Festpunkt (14, 15) am Rahmen führendes flexibles Halteelement (34, 36) aufweist, wobei sich die dritte (22) und vierte (24) Walze in einer Halteposition befinden, wenn sie sich nahe des Mittelpunkts des Rahmens nebeneinander befinden, und sich in einer Freigabeposition befinden, wenn sich die dritte Walze (22) neben der ersten Walze (16) und die vierte Walze (24) neben der zweiten Walze (18) befindet, wobei sich in der Haltestellung auf den flexiblen Halteelementen (34, 36) befindliches Flachmaterial von den Halteelementen (34, 36) abschält, wenn sich die dritte und vierte Walze symmetrisch in Richtung Freigabeposition bewegen.

2. Vorrichtung nach Anspruch 1, dadurch gekennzeichnet, daß die Festpunkte (14, 15) des Rahmens jeweils neben den entsprechenden festen Walzen (16, 18) und in einer höher als die Axialebene der entsprechenden Walzen gelegenen Ebene angeordnet sind.

3. Vorrichtung nach Anspruch 1 oder 2, dadurch gekennzeichnet, daß im Rahmen Schlitze (30, 32) für Axialzapfen (26, 28) der dritten und vierten Walzen (22, 24) vorgesehen sind.

4. Vorrichtung nach einem der Ansprüche 1 bis 3, dadurch gekennzeichnet, daß die erste und zweite Walze (16, 18) federnde Vorspannmittel haben, so daß, wenn die Axialzapfen (26, 28) der dritten und vierten Walze (22, 24) symmetrisch in Richtung der Freigabeposition gleiten, sich die flexiblen Halteelemente (34, 36) auf die festen Walzen (16, 18) aufwinden.

5. Verfahren nach einem der Ansprüche 1 bis 4, dadurch gekennzeichnet, daß sich die flexiblen Halteelemente (34, 36) entlang der gesamten Länge der Walzen (16, 17, 22, 24) erstrecken.

6. Vorrichtung nach einem der Ansprüche 1 bis 5, dadurch gekennzeichnet, daß die flexiblen Halteelemente (34, 36) jeweils in Form von flexiblen Bandstreifen vorliegen.

7. Vorrichtung nach einem der Ansprüche 1 bis 6, dadurch gekennzeichnet, daß die Axialzapfen (26, 28) der dritten und vierten Walze (22, 24) mit Verschiebevorrichtungen verbunden sind.

8. Vorrichtung nach Anspruch 1, dadurch gekennzeichnet, daß der Rahmen aus Rundstäben gebildet ist.

9. Vorrichtung nach Anspruch 8, dadurch gekennzeichnet, daß die Verschiebevorrichtungen verschieblich auf den Rundstäben des Rahmens angeordnet sind.

**Revendications**

1. Dispositif (10) destiné au positionnement précis de feuilles (60), comprenant un châssis (12, 14, 15) comportant des premier 16 et second 18 rouleaux fixes disposés transversalement de façon contigüe aux extrémités du châssis, un troisième (22) et un quatrième (24) rouleaux coulissants et rotatifs, intercalés entre les premier 16 et second 18 rouleaux, un élément de support souple (34, 36) s'étendant à partir de chacun des rouleaux fixes (16, 18) et autour du rouleau contigü (22, 24) sur un dispositif de fixation (14, 15) sur le châssis, les troisième (22) et quatrième (24) rouleaux étant dans une position de support lorsque les rouleaux sont contigüs l'un par rapport à l'autre à proximité du centre du châssis et dans une position de libération lorsque le troisième rouleau (22) est contigü au premier rouleau (16) et que le quatrième rouleau (24) est contigü au second rouleau (18), moyennant quoi la feuille placée sur les éléments de support souple (34, 36) dans la position de support se détache des éléments (34, 36) lorsque les troisième et quatrième rouleaux se déplacent symétriquement vers la position de libération.

2. Dispositif selon la revendication 1, caractérisé en ce que chaque dispositif de fixation (14, 15) sur le châssis est situé de façon contigüe à et dans un plan supérieur au plan axial du rouleau fixe associé (16, 18).

3. Dispositif selon la revendication 1 ou 2, caractérisé en ce que les fentes (30, 32) pour les ergots axiaux (26, 28) des troisième et quatrième rouleaux (22, 24) sont montés dans le châssis.

4. Dispositif selon l'une quelconque des revendications 1 à 3, caractérisé en ce que les premier et second rouleaux (16, 18) comportent des moyens de sollicitation élastique de telle sorte que lorsque les ergots axiaux (26, 28) des troisième et quatrième rouleaux (22, 24) coulissent symétriquement vers la position de libération, les éléments de support souples (34, 36) s'enroulent sur les rouleaux fixes (16, 18).

5. Dispositif selon l'une quelconque des revendications 1 à 4, caractérisé en ce que les éléments de support souples (34, 36) s'étendent sur toute la longueur des rouleaux (16, 17, 22, 24).

6. Dispositif selon l'une quelconque des revendications 1 à 5, caractérisé en ce que chaque élément de support souple (34, 36) se présente sous la forme de bandes souples.

7. Dispositif selon l'une quelconque des revendications 1 à 6, caractérisé en ce que des ergots axiaux (26, 28) des troisième et quatrième rouleaux (22, 24) sont fixés sur des mécanismes de coulissement.

8. Dispositif selon la revendication 1, caractérisé en ce que le châssis est formé à partir de tiges circulaires.

9. Dispositif selon la revendication 8, caractérisé en ce que les mécanismes de coulissement sont disposés de façon coulissante sur les tiges circulaires du châssis.

Fig.1.

*Fig.2.*

EP 0 307 399 B1

Fig.3.

EP 0 307 399 B1

Fig.4.

EP 0 307 399 B1